# EUROPEAN PATENT APPLICATION

(11) **EP 3 929 572 A1**
(43) Date of publication of application: **29.12.2021**
(21) Application number: 20182337.4
(22) Date of filing: 25.06.2020
(51) Int. Cl.: G01N 22/00, G01N 27/22

(54) **APPARATUS FOR DETECTING PERMITTIVITY CHANGE**

(71) Applicant: Rosemount Tank Radar AB, 435 23 Mölnlycke (SE)
(72) Inventor: ZHANG, Jingdong, SLOUGH, Berkshire SL3 8WY (GB)
(74) Representative: Kransell & Wennborg KB

(57) **Abstract**

An apparatus for detecting a change of a permittivity at a probing location, comprising: a transceiver; a coaxial probe configured to guide a transmit signal towards the probing end, and to guide a return signal resulting from reflection of the transmit signal at the probing end back towards the transceiver; and processing circuitry coupled to the transceiver and configured to determine a property indicative of the change of the permittivity at the probing location based on a relation between the transmit signal and the return signal. The coaxial probe comprises: an outer conductor; an inner conductor having first and second inner conductor segments; and a signal reflecting component arranged between the first and second inner conductor segments and configured to cause at least a portion of the return signal to pass several times between the probing end and the internal signal reflection component before reaching the transceiver.

## Description

### Technical Field of the Invention

The present invention relates to an apparatus for detecting a change of a permittivity at a probing location, comprising a coaxial probe extending from a connection end to a probing end arrangeable at the probing location.

### Technical Background

By detecting a change of a probed permittivity, such as the change of a permittivity of a medium exhibiting properties that change over time, conclusions can be drawn about such properties of the medium. It is known that a wide variety of medium properties, sometimes also referred to as process variables, influence the permittivity of the medium. Examples of such medium properties may include the material composition of the medium and the physical and/or chemical state of the medium. Specific examples of medium properties that may be of interest to monitor and/or determine may include material interface level, bulk density, moisture content, liquid concentration, sugar concentration, salt concentration, fouling, and oil quality, etc.

The location where it is desired to monitor and/or determine medium properties may be subjected to challenging environmental conditions, for example in respect of one or several of temperature, pressure and chemical activity. Furthermore, the result of the monitoring and/or determination of the medium properties may be relevant to safety. It is therefore desirable to use durable and reliable equipment.

An apparatus comprising a coaxial probe extending from a connection end coupled to a transceiver to a probing end arrangeable at a probing location is known to be able to provide the desired durability and reliability.

US 5 675 259 discloses a microwave probe, based on a radiofrequency open-ended coaxial waveguide, for monitoring the presence, concentration and flow in a flowline or in a holding container. The microwave probe according to US 5 675 259 appears to allow detection of a change of the permittivity of a probed medium by detecting the phase and amplitude of a reflected signal. At least for some permittivity ranges, however, the change of phase and/or amplitude corresponding to a change of the permittivity would be very small, resulting in a poor accuracy in the detection of the permittivity change and/or a requirement for sophisticated and costly measurement electronics.

WO 2019/122831 discloses a level switch that is operable to initiate a switching function in the event of a change of medium in contact with the switch. The switch includes a coaxial probe extending from a connection end to a distal end for contact with the medium. The coaxial probe is configured to create an impedance mismatch at or adjacent to the connection end.

Although the level switch described in WO 2019/122831 provides for improved measurement performance in comparison to previously known measurement devices, there appears to be room for improvement. In particular, it would be desirable to simplify development and production of probes for different applications requiring different frequency ranges.

### Summary

In view of the above, a general object of the present invention is to provide an improved apparatus for detecting a change of a permittivity at a probing location, in particular an apparatus that is simpler to adapt for different applications.

According to an aspect of the present invention, it is therefore provided an apparatus for detecting a change of a permittivity at a probing location, the apparatus comprising: a transceiver for generating, transmitting and receiving electromagnetic signals; a coaxial probe extending from a connection end coupled to the transceiver to a probing end arrangeable at the probing location, the coaxial probe being configured to guide a transmit signal generated by the transceiver from the connection end towards the probing end, and to guide a return signal resulting from reflection of the transmit signal at the probing end back towards the transceiver; and processing circuitry coupled to the transceiver and configured to determine a property indicative of the change of the permittivity at the probing location based on a relation between the transmit signal and the return signal, wherein the coaxial probe comprises: an outer conductor; an inner conductor having a first inner conductor segment and a second inner conductor segment; dielectric material between the outer conductor and the inner conductor; and a signal reflecting component arranged between the first inner conductor segment and the second inner conductor segment and configured to cause at least a portion of the return signal to pass several times between the probing end and the internal signal reflection component before reaching the transceiver. In other words, the signal reflecting component may be said to be configured to cause at least a portion of the return signal to reverberate between the probing end and the internal signal reflection component.

The "transceiver" may be one functional unit capable of transmitting and receiving electromagnetic signals, or may be a system comprising separate transmitter and receiver units.

It should be noted that the processing circuitry may be provided as one device or several devices working together.

The signal reflecting component may be arranged axially between the first inner conductor segment and the second inner conductor segment. Furthermore, the first inner conductor segment and the second inner conductor segment may be directly axially adjacent each other, among inner conductor segments of the coaxial probe. In other words, the coaxial probe may lack an inner conductor segment arranged axially between the first inner conductor segment and the second inner conductor segment.

The present invention is based on the realization that the relatively weak effect of a small change in permittivity at the probing end can be amplified by configuring the coaxial probe for multiple internal reflections of an electromagnetic return signal at the probing end of the coaxial probe, at least for some frequencies, and that typical constraints of a coaxial probe for many relevant applications make it very challenging to achieve the desired strong multiple internal reflection for a sufficiently wide bandwidth to make a single coaxial probe suitable for diverse applications. For instance, various applications may require a constant outer diameter of the coaxial probe, which may, for example, be ¾" (about 19 mm), which in turn limits the ability to control the impedance using probe dimensions, such as the ratio between the diameter of the inner conductor and the inner diameter of the outer conductor.

The present inventor has now realized that these challenges can be at least partly overcome by providing the coaxial probe with a signal reflecting component arranged between inner conductor segments.

Hereby, a strong internal reflection can achieved, which is relatively easy to adapt to different applications by using signal reflecting components with different dimensions and/or material properties for different applications. This may allow for optimization of the signal reflecting component for strong internal reflection in a relatively narrow frequency band, which may provide for a simpler coaxial probe configuration, compared to the case where a broadband internal reflection is required. In some embodiments, the coaxial probe may be configured in such a way that strong internal reflection, and thus the desired reverberation, in different frequency bands can be achieved with different signal reflecting components, while keeping the diameters of the first inner conductor segment and the second inner conductor segment unchanged. This would also provide for simpler manufacturing of coaxial probes adapted for different frequency bands.

According to various embodiments, the signal reflecting component may be a structural component joined to at least one of the first inner conductor segment and the second inner conductor segment. This may provide for simplified handling, and ensure that the signal reflecting component remains in its desired location during transportation, installation, and operation of the apparatus.

Alternatively, the signal reflecting component may be a structural component being structurally separated from the first inner conductor segment and the second inner conductor segment. This may provide for a convenient production flow, in which sequential arrangement of the first and second inner conductor segments and the signal reflecting component is carried out, with the signal reflecting component being arranged axially between the first inner conductor segment and the second inner conductor segment.

In various embodiments, the signal reflecting component may advantageously comprise a dielectric body.

The dielectric body may be arranged to electrically conductively separate the first inner conductor segment and the second inner conductor segment from each other. In other words, the dielectric body may provide a an electric insulator between the first inner conductor segment and the second inner conductor segment and galvanically separate the first inner conductor segment and the second inner conductor segment.

A suitable axial extension of the signal reflecting component may depend on the desired internal reflection properties of the coaxial probe as well as on material properties of the signal reflecting component and other parts of the coaxial probe. The suitable axial extension of the signal reflecting component may, for example, be determined using, perse, known electrical circuit simulation. It may, however, be advantageous if the axial extension of the signal reflecting component is at least 1 mm, and thus axially separates the first inner conductor segment and the second inner conductor segment from each other by at least 1 mm, in order to achieve a galvanic separation between the first inner conductor segment and the second inner conductor segment.

According to embodiments, the coaxial probe may comprise a reflection section extending from the connection end and including the first inner conductor segment and the signal reflecting component; and a main section extending between the reflection section and the probing end and including the second inner conductor segment.

An electrical length along the coaxial probe of the reflection section may be a multiple of quarter wavelengths at the center frequency; and an electrical length along the coaxial probe of the main section may be an integer number of half wavelengths at the center frequency. This provides for efficient internal reflection at the interface between the reflection section and the main section, and provides for formation of a standing wave at the center frequency in the main section of the coaxial probe.

It should be understood that the electrical lengths mentioned above do not need to be exactly related to the wavelength at the center frequency, but that the electrical length of the reflection section may be approximately equal to, such as within ±20% of, a multiple of quarter wavelengths and that the electrical length of the main section may be approximately equal to, such as within ±20% of, a multiple of half wavelengths.

In summary, the present invention thus relates to an apparatus for detecting a change of a permittivity at a probing location, comprising: a transceiver; a coaxial probe configured to guide a transmit signal towards the probing end, and to guide a return signal resulting from reflection of the transmit signal at the probing end back towards the transceiver; and processing circuitry coupled to the transceiver and configured to determine a property indicative of the change of the permittivity at the probing location based on a relation between the transmit signal and the return signal. The coaxial probe comprises: an outer conductor; an inner conductor having first and second inner conductor segments; dielectric material between the outer conductor and the inner conductor; and a signal reflecting component arranged between the first and second inner conductor segments and configured to cause at least a portion of the return signal to reverberate between the probing end and the internal signal reflection component before reaching the transceiver.

### Brief Description of the Drawings

These and other aspects of the present invention will now be described in more detail, with reference to the appended drawings showing a currently preferred embodiment of the invention, wherein:
Fig 1 schematically illustrates an example application for the apparatus according to embodiments of the present invention, in the form of a process tank;
Fig 2 is a functional block diagram of the apparatus in fig 1;
Fig 3A is a cut-out perspective illustration schematically showing a first example configuration of the coaxial probe comprised in the apparatus in fig 1;
Fig 3B is a cross-section view of the coaxial probe in fig 3A;
Figs 4A-B are cut-out perspective illustrations schematically showing further example configurations for different frequency bands of the coaxial probe comprised in the apparatus in fig 1; and
Figs 5A-B are diagrams illustrating the measurement performance of an apparatus according to an example embodiment of the apparatus according to the present invention, adapted for use a relatively low frequencies.

### Detailed Description of Example Embodiments of the Invention

In the present detailed description, various embodiments of the apparatus according to the present invention are mainly discussed with reference to an apparatus for detecting a change of permittivity at a probing location that is inside a tank in the process industry through direct contact between the probing end of the coaxial probe and the medium in the tank.

It should be noted that this by no means limits the scope of the present invention, which equally well includes, for example, an apparatus configured for detecting changes in permittivity when scanning a solid, such as a concrete structure, or an apparatus arranged to detect changes in permittivity through a portion of a non-metallic tank wall.

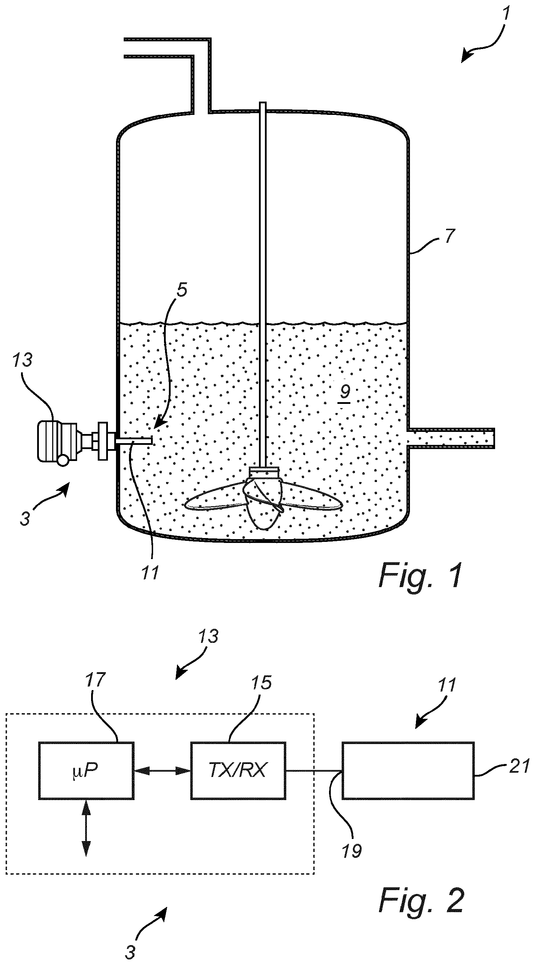

Fig 1 schematically illustrates an example application for the apparatus according to embodiments of the present invention, in the form of a process tank 1. In fig 1, an apparatus 3 for detecting a change of permittivity at a probing location 5 is shown to be installed through an aperture in the tank wall 7. The apparatus 3 may be a switch, or it may be configured to monitor or detect various properties of the product 9 in the tank 1. In the example configuration in fig 1, the apparatus 3 comprises a coaxial probe 11 at least partly arranged inside the tank 1, and a measurement electronics unit 13 arranged outside the tank 1.

Referring to the simplified functional block diagram in fig 2, the apparatus 3 comprises, in addition to the coaxial probe 11, a transceiver 15 and processing circuitry 17. The transceiver 15 is configured to generate, transmit, and receive electromagnetic signals within a frequency band having a center frequency f_{c}. The coaxial probe 11 extends from a connection end 19 coupled to the transceiver 15 to a probing end 21, that is arrangeable at the probing location 5 (referring to fig 1). The coaxial probe 11 is configured to guide a transmit signal S_{T} generated by the transceiver 15 from the connection end 19 towards the probing end 21, and to guide a return signal S_{R} resulting from reflection of the transmit signal S_{T} at the probing end 21 back towards the transceiver 15. As is schematically indicated in fig 2, the processing circuitry 17 is coupled to the transceiver 15. The processing circuitry 17 is configured to determine a property indicative of the change of the permittivity at the probing location 5 based on a relation between the transmit signal S_{T} and the return signal S_{R}.

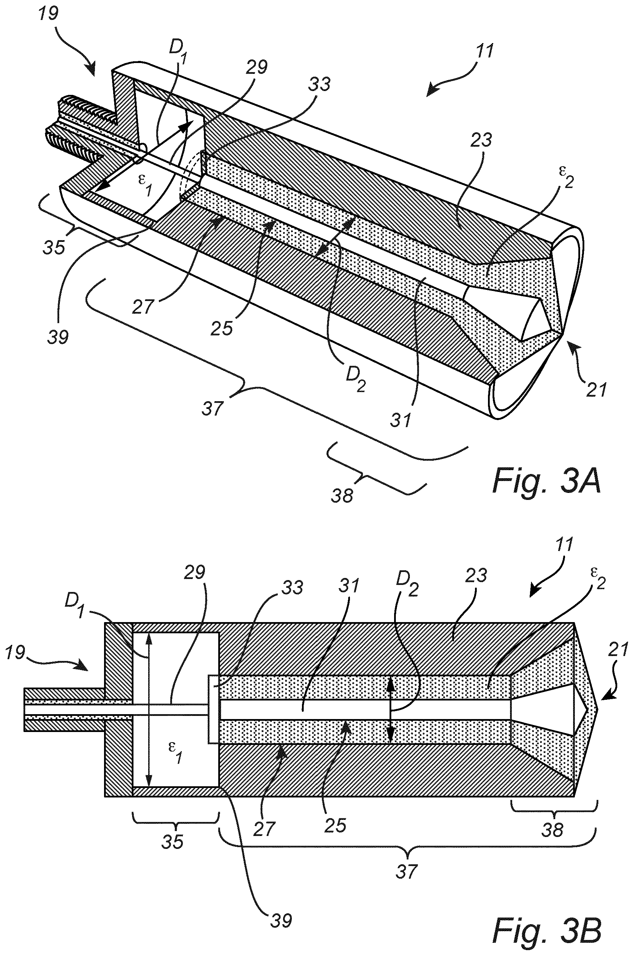

To provide for improved measurement performance, in particular measurement sensitivity, the coaxial probe 11 is configured to cause at least a portion of the return signal S_{R}, at a frequency related to the permittivity at the probing location 5, to be reverberate inside the coaxial probe 11 before reaching the transceiver 15. A first example configuration of the probe 11 comprised in the apparatus according to embodiments of the present invention will now be described in greater detail with reference to figs 3A-B, where fig 3A is a cut-out perspective illustration, and fig 3B is a plane view of a cross-section of the coaxial probe 11.

Referring to figs 3A-B, the coaxial probe 11 comprises an outer conductor 23, an inner conductor 25, and dielectric material 27 between the outer conductor 23 and the inner conductor 25. As is indicated in fig 3A, the inner conductor 25 includes a first inner conductor segment 29, and a second inner conductor segment 31. Between the first 29 and the second 31 inner conductor segments, signal reflecting component 33 is arranged. As was explained above, when a transmit signal S_{T} has been guided by the coaxial probe 11 from the connection end 19 to the probing end 21, a portion of the transmit signal S_{T} is reflected back towards the connection end as a return signal S_{R} by the impedance discontinuity at the interface between the probing end 21 and the surrounding medium. The reflection properties of this interface are determined by the complex permittivity of the surrounding medium, as well as by the frequency range of the transmit signal S_{T}. A change in the permittivity at the probing location (where the probing end is arranged) will result in a change in one or several properties of the return signal S_{R}.

The signal reflecting component 33 is here provided in the form of a dielectric body and is arranged and configured to reflect at least a portion of the return signal S_{R} back towards the probing end 21. In connection with each reflection at the signal reflecting component 33, a portion of the return signal S_{R} passes through to the transceiver 15 to contribute to the total return signal S_{R} that reaches the transceiver 15, and can be used for the detection of the change in permittivity at the probing location 5. Leaks through the probing end 21 results in a reduction of total return signal S_{R} that reaches the transceiver 15.

The reflection at the interface between the second inner conductor segment 31 and the signal reflection component 33 results from a frequency-dependent impedance discontinuity. It has been found that the reflection at the interface between the second inner conductor segment 31 and the signal reflection component 33 can be enhanced by further increasing the magnitude of the impedance discontinuity by modifying the geometry and/or material composition of the coaxial probe 11. To that end, the example configuration of the coaxial probe 11 in fig 3A includes a reflection section 35 extending from the connection end 19 and including the first inner conductor segment 29 and the signal reflecting component 33, and a main section 37 extending between the reflection section 35 and the probing end 29 and including the second inner conductor segment 31. At the interface 39 between the reflection section 35 and the main section 37, the reflection section 35 exhibits a first inner diameter D₁ of the outer conductor 23, and the main section 37 exhibits a second inner diameter D₂, smaller than the first inner diameter D₁, of the outer conductor 23. In addition, the reflection section 35 comprises dielectric material having a first permittivity ε₁ between the first inner conductor segment 29 and the outer conductor 23; and the main section 37 comprises dielectric material having a second permittivity ε₂, higher than the first permittivity ε₁, between the second inner conductor segment 31 and the outer conductor 23.

To provide for maximum reflection at the interface between the main section 37 and the reflection section 35, the electrical length L₁ of the reflection section is about a quarter of the wavelength (or multiple quarter wavelengths) of the transmit signal S_{T} (and the return signal S_{R}) at the center frequency f_{c}. Furthermore, the length of the main section 37 is an integer multiple of half wavelengths at the center frequency f_{c}, to allow the formation of a standing wave in the main section 37. In an expansion portion 38 of the main section 37, ending at the probing end 21, the inner diameter of the outer conductor 23 increases with decreasing axial distance to the probing end 21. This expansion portion provides for an increased probe sensitivity.

According to one example configuration of the probe 11 optimized for a frequency band with a center frequency f_{c} of about 800 MHz, the probe 11 may have the following dimensions and materials.

| | Inner conductor diameter (mm) | Outer conductor inner diameter (mm) | Length (mm) | ε |
|---|---|---|---|---|
| Main section | 2 | 7 | 113 | 2.1 |
| Reflection section | 2 | 20 | 20 | 1 |
| Signal reflection component | - | 7* | 1 | 11 |
| Expansion portion | 7 | 20** | 13 | 2.1 |

| | | | | |
|---|---|---|---|---|
| *diameter of signal reflection component **maximum diameter | | | | |

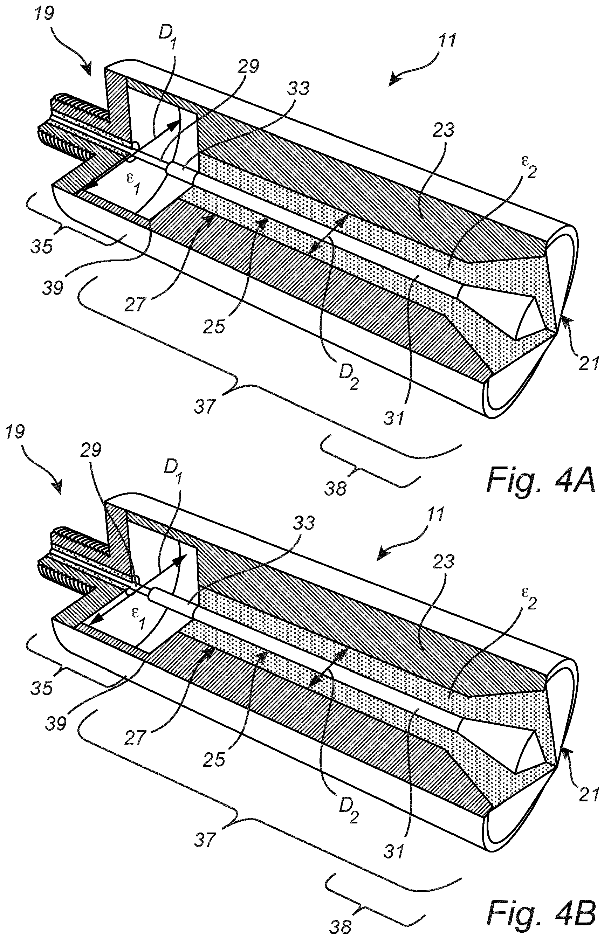

Through the choice of dielectric materials, and probe dimensions according to the table above, the coaxial probe 11 in figs 3A-B has been adapted to a center frequency f_{c} of about 800 MHz, which would otherwise have been very difficult to achieve, given the dimensional constraints of the coaxial probe 11 for many applications, notably the outer diameter of the coaxial probe 11. As will be apparent to one of ordinary skill in the relevant art, the coaxial probe 11 can be tuned for the same frequency with other combinations of materials and dimensions. One such further example coaxial probe configuration is schematically shown in fig 4A.

As is indicated in fig 4A, the signal reflecting component 33 is provided in the form of an elongated cylindrical "plug" rather than the "disc" shape shown in figs 3A-B. In fig 4A, the diameter of the signal reflecting component 33 is shown to be substantially identical to the diameter of the second inner conductor segment 31. Furthermore, the signal reflecting component 33 is bonded to the second inner conductor segment 31. This may facilitate production of the coaxial probe 11. Advantageously, the signal reflecting component 33 may also be bonded to the first inner conductor segment 29. According to one example embodiment, the signal reflecting component 33 may be made of a ceramic material, and the signal reflecting component 33 and the second inner conductor segment 31 may be joined together by brazing. The signal reflecting component 33 may also be joined together with the first inner conductor segment 29 by brazing.

The coaxial probe 11 in fig 4B has been adapted to a different frequency range by providing a longer signal reflection component 33. All other dimensions (except the length of the first inner conductor segment 29) and materials may remain the same, providing for flexibility in production.

In various embodiments, the inner conductor 25 and the outer conductor 23 may be formed from stainless steel and the dielectric material in the main section 37 may be PTFE, ceramic or other suitable material. For higher temperature applications it may be preferred to form the electrodes from titanium, in which case the insulation may advantageously be of a material having a very similar thermal expansion coefficient. An example of such a material is Ceramit^{®} 14, a material available from Ceramic Substrates and Components Limited of Newport, Isle of Wight, UK. The dielectric material in the reflection section 35 may, for example, be air or another low permittivity material such as foam, examples of which include a low dielectric open cell foam such as, for example, Cuming Microwave C-Stock or Eccostock FFP.

The signal reflection component may, for example, be made of a dielectric material with properties suitable for the requirements of the particular application. Examples of such dielectric materials may include PTFE and various ceramic materials.

In the example configurations of the coaxial probe 11 shown in figs 4A-B, the signal reflection component 33 is joined to at least the second inner conductor segment 31. In alternative configurations, the signal reflection component 33 may instead be provided as a completely separate component.

It should be noted that the configurations of coaxial probes 11 adapted for different transmit signal frequencies described above with reference to figs 4A-B are representative example configurations only, and that other variants are well within the reach of one of ordinary skill in the art, without undue experimentation, based on the guidance provided in the present application.

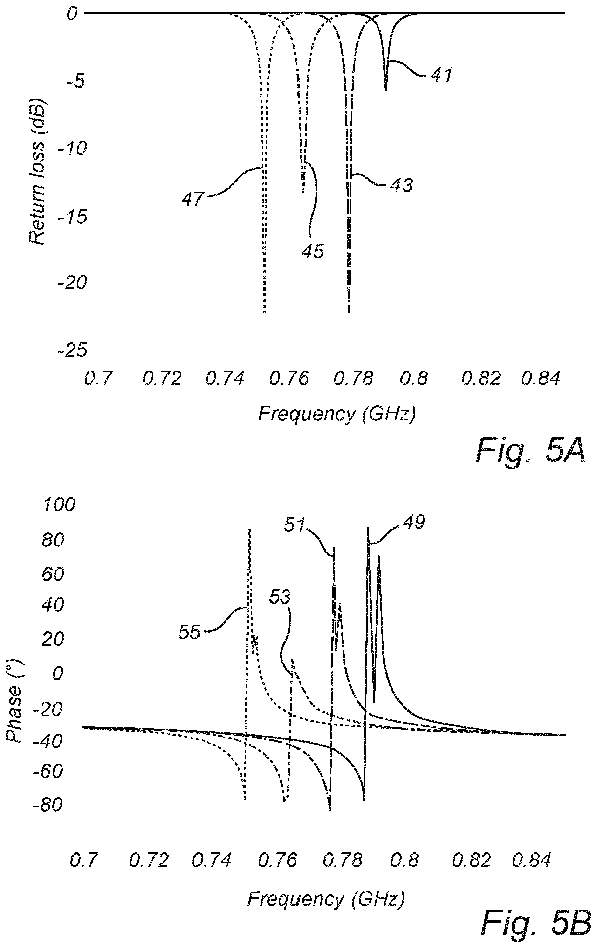

Figs 5A-B are diagrams illustrating the measurement performance of an apparatus according to an example embodiment of the apparatus according to the present invention, adapted for use a relatively low frequencies. As will be clear from the description related to fig 5A-B below, a change in the permittivity at the probing location 5 results in a shift in frequency of the peak return loss as well as a shift in frequency for a given phase of the return signal S_{R}.

Referring first to fig 5A, the return loss (the relation between return signal power and transmit signal power in dB) is plotted as a function of frequency for different values of the permittivity ε at the probing location 5. Specifically, the solid line 41 results from ε=1 (air), the dashed line 43 results from ε=3, the dash-dot line 45 results from ε=10, and the dotted line 47 results from ε=80. A change in permittivity can be detected (and quantified) by determining the frequency for the maximum return loss. This frequency is relatively easy to determine using standard, low-frequency electronics, using, for example, well-known heterodyne return loss measurement technology.

Turning to fig 4B, the phase of the return signal S_{R} is plotted as a function of frequency for different values of the permittivity ε at the probing location 5. Specifically, the solid line 49 results from ε=1 (air), the dashed line 51 results from ε=3, the dash-dot line 53 results from ε=10, and the dotted line 47 results from ε=55. A change in permittivity can be detected (and quantified) by determining the frequency for the phase discontinuity.

The person skilled in the art realizes that the present invention by no means is limited to the preferred embodiments described above. On the contrary, many modifications and variations are possible within the scope of the appended claims, for example many other configurations of the signal reflecting component 33 are possible.

## Claims

1. An apparatus for detecting a change of a permittivity at a probing location, the apparatus comprising:
a transceiver for generating, transmitting and receiving electromagnetic signals within a frequency band having a center frequency;
a coaxial probe extending from a connection end coupled to the transceiver to a probing end arrangeable at the probing location, the coaxial probe being configured to guide a transmit signal generated by the transceiver from the connection end towards the probing end, and to guide a return signal resulting from reflection of the transmit signal at the probing end back towards the transceiver; and
processing circuitry coupled to the transceiver and configured to determine a property indicative of the change of the permittivity at the probing location based on a relation between the transmit signal and the return signal,
wherein the coaxial probe comprises:
an outer conductor;
an inner conductor having a first inner conductor segment and a second inner conductor segment;
dielectric material between the outer conductor and the inner conductor; and
a signal reflecting component arranged between the first inner conductor segment and the second inner conductor segment and configured to cause at least a portion of the return signal to pass several times between the probing end and the signal reflection component before reaching the transceiver.

2. The apparatus according to claim 1, wherein the signal reflecting component is a structural component being joined to the first inner conductor segment and the second inner conductor segment.

3. The apparatus according to claim 1 or 2, wherein the signal reflecting component is a dielectric body.

4. The apparatus according to claim 3, wherein the dielectric body electrically conductively separates the first inner conductor segment and the second inner conductor segment from each other.

5. The apparatus according to any one of the preceding claims, wherein an axial extension of the signal reflecting component is at least 1 mm.

6. The apparatus according to any one of the preceding claims, wherein the coaxial probe comprises:
a reflection section extending from the connection end and including the first inner conductor segment and the signal reflecting component; and
a main section extending between the reflection section and the probing end and including the second inner conductor segment.

7. The apparatus according to claim 6, wherein, at an interface between the reflection section of the coaxial probe and the main section of the coaxial probe:
the reflection section exhibits a first inner diameter of the outer conductor; and
the main section exhibits a second inner diameter of the outer conductor, smaller than the first inner diameter.

8. The apparatus according to claim 6, wherein, at an interface between the reflection section of the coaxial probe and the main section of the coaxial probe:
the reflection section exhibits a first inner diameter of the outer conductor; and
the main section exhibits a second inner diameter of the outer conductor, larger than the first inner diameter.

9. The apparatus according to any one of claims 6 to 8, wherein, at an interface between the reflection section of the coaxial probe and the main section of the coaxial probe:
the reflection section comprises dielectric material having a first permittivity between the first inner conductor segment and the outer conductor; and
the main section comprises dielectric material having a second permittivity, higher than the first permittivity, between the second inner conductor segment and the outer conductor.

10. The apparatus according to claim 9, wherein the second permittivity is at least two times higher than the first permittivity.

11. The apparatus according to any one of claims 6 to 10, wherein:
an electrical length of the reflection section is an integer number of quarter wavelengths at the center frequency; and
an electrical length of the main section is an integer number of half wavelengths at the center frequency.

12. The apparatus according to any one of claims 6 to 11, wherein, in a portion of the main section ending at the probing end, an inner diameter of the outer conductor increases with decreasing axial distance to the probing end.

13. The apparatus according to any one of the preceding claims, wherein the processing circuitry is configured to determine a measure indicative of a relation between an amplitude of the return signal and an amplitude of the transmit signal for different frequencies within the frequency band.

14. The apparatus according to any one of the preceding claims, wherein the processing circuitry is configured to determine a measure indicative of a relation between a phase of the return signal and a phase of the transmit signal for different frequencies within the frequency band.
